# EUROPEAN PATENT APPLICATION

(11) **EP 1 901 111 A2**
(43) Date of publication of application: **19.03.2008**
(21) Application number: 07016070.0
(22) Date of filing: 16.08.2007
(51) Int. Cl.: G02F 1/1333, H01L 21/00

(54) **Method and apparatus for making flexible displays**

(30) Priority: 12.09.2006 KR 20060087934
(71) Applicant: Samsung Electronics Co., Ltd., Yeongtong-gu Suwon-city, Gyeonggi-do 442-742 (KR)
(72) Inventor: Hong, Wang-Su, Suwon-si, Gyeonggi-do (KR)
(74) Representative: Weitzel, Wolfgang

(57) **Abstract**

Methods and apparatus for making flexible display devices include a supporting member main body, a mount, vacuum paths, and nipples with stoppers. The mount is disposed at the surface of the supporting member main body, and includes a plurality of grooves. A flexible mother substrate is mounted on the mount. The vacuum paths penetrate the supporting member main body so as to communicate with the grooves. One end of each of the vacuum paths communicates exteriorly of the main body through one of the nipples and is attachable to and detachable from an external vacuum source. The method and apparatus enable the flexible mother substrate to be processed without being bent or stretched and without deterioration caused by the use of an adhesive.

## Description

### BACKGROUND OF THE INVENTION

The present disclosure relates to methods and apparatus for making flexible display devices.

Liquid crystal displays (LCDs) and organic light emitting devices (OLEOs) are currently among the more widely used types of flat panel display devices.

LCDs typically include two panels with a layer of a liquid crystal material interposed therebetween. Each of the panels includes field generating electrodes, including pixel electrodes and a common electrode. LCDs form images by controlling the polarization of light passing through the panel with the electrodes. That is, a voltage is applied to the field generating electrodes to induce an electric field on the liquid crystal layer, and the induced electric field controls the arrangement of the molecules of the liquid crystal layer, thereby controlling the polarization of the incident light so as to display images.

OLEDs typically include a hole injection electrode (anode), an electron injection electrode (cathode), and an organic emission layer formed therebetween. The OLED is a self emissive display device that emits light through recombining and vanishing holes injected from the anode and electrons injected from the cathode in the organic emission layer.

Such display devices typically use heavy, fragile glass substrates, and accordingly, the devices have limitations in terms of portability and in providing large-screen displays. In order to overcome the limitations of glass substrates, display devices have been developed that use plastic substrates that are lighter in weight, resistant to impact, and flexible.

However, it is difficult to form a thin film pattern, such as electrodes and signal lines, on the plastic substrates because, f heat is applied to them, the substrates are easily bent or stretched. In an effort to overcome this shortcoming, a method was introduced of bonding a plastic substrate onto a glass supporting member, forming a thin film pattern on the plastic substrate with the glass supporting member bonded thereto, and then separating the plastic substrate from the glass supporting member. In this method, the plastic substrate is bonded to the glass supporting member using an adhesive. However, when an adhesive is used to bond the plastic substrate to the glass supporting member, the adhesive can easily damage the plastic substrate.

Accordingly, methods and apparatus are needed for manufacturing flexible display devices that enable a flexible substrate thereof to progress through a number of manufacturing processes while preventing the flexible substrate from being bent, stretched or damaged.

### SUMMARY OF THE INVENTION

In accordance with the exemplary embodiments thereof described herein, methods and apparatus are provided for making flexible display devices that prevent a flexible substrate of the devices from being bent or damaged during the manufacture thereof.

In one exemplary embodiment, an apparatus for manufacturing a flexible display device includes a supporting member main body, a mount, vacuum paths, and nipples. The mount is disposed at a surface of the supporting member main body and includes a plurality of grooves for mounting a flexible mother substrate. The vacuum paths penetrate the supporting member main body to communicate with the grooves, and each of the vacuum paths has one end that communicates exteriorly of the main body. The nipples communicate the vacuum paths to the outside.

The exemplary apparatus may further include stoppers rotatably attached at inlets of the nipples to selectively perform opening and closing operations, a guide for holding the supporting member main body, a connector that connects to an external vacuum source, and which is attachable to and detachable from the nipples. The connector may be slidably disposed on the guide for sliding attachment to and detachment from the nipples.

The apparatus may further include a plurality of fixing pins to fix the supporting member main body on the guide. A cross-section of each of the grooves may have a V shape. The grooves may be disposed in a lattice shape. The supporting member main body may comprise aluminum.

In another exemplary embodiment, a method for manufacturing a flexible display device-includes applying an electrostatic force to one side of a flexible mother substrate. The electrostatically charged flexible mother substrate is mounted on a supporting member and attached to the supporting member by means of a vacuum. A thin film pattern is the formed on the flexible mother substrate. While the flexible mother substrate is being attached, a vacuum path penetrating the supporting member may be connected to an external vacuum source, and a vacuum may be created in the vacuum path by the vacuum source. The vacuum source may then be separated from the supporting member.

The flexible mother substrate may comprise plastic. The flexible mother substrate may include an organic layer, an under-coating formed on both sides of the organic layer, a barrier formed on the under-coating, and a hard coating formed on the barrier. The organic layer may be one selected from the group consisting of polyethylene ether phthalate, polyethylene naphthalate, polycarbonate, polyarylate, polyether imide, polyether sulfonate, polyimide, and polyacrylate, The under-coating and the hard-coating may include acryl resin. The barrier may include SiO₂ or Al₂O₃. The supporting member may comprise aluminum. The thin film pattern may include an amorphous silicon thin film transistor (TFT). The thin film pattern may include an organic TFT.

A better understanding of the above and many other features and advantages of the novel methods and apparatus of the present invention may be obtained from a consideration of the detailed description below of some exemplary embodiments thereof, particularly if such consideration is made in conjunction with the appended drawings, wherein like reference numerals are used to identify like elements illustrated in one or more of the figures thereof.

### BRIEF DESCRIPTION OF THE DRAWINGS

FIG. 1 is a partial perspective view of an exemplary embodiment of an apparatus for manufacturing flexible display devices in accordance with the present invention;
FIG. 2 is a cross-sectional view of the exemplary apparatus of FIG. 1, as seen along the lines of the section II-II taken therein;
FIGS. 3-6 are cross-sectional views illustrating sequential processes involved in manufacturing a flexible display device in accordance with the present invention;
FIG. 7 is a partial top plan view of an exemplary embodiment of an LCD in accordance with the present invention, showing a single pixel area thereof;
FIGS. 8A and 8B are cross-sectional views of the exemplary LCD of FIG. 7 as respectively seep along the lines of the sections VIIIa-VIIIa and VIIIb-VIIIb taken therein;
FIGS. 9, 11, and 15 are partial top plan views illustrating sequential stages of an exemplary method for manufacturing a lower panel of the LCD of FIGS. 7 to 8B in accordance with the present invention;
FIGS. 10A and 10B are cross-sectional views of the lower panel of FIG. 9 as respectively seen along the lines of the sections Xa-Xa and Xb-Xb taken therein;
FIGS. 12A and 12B are cross-sectional views of the lower panel of FIG. 11 as respectively seen along the lines of the sections XIIa-XIIa and XIIb-XIIb taken therein;
FIGS. 14A and 14B are cross-sectional views of the lower panel of FIG. 13 as respectively seen along the lines of the sections XIVa-XIVa and XIVb-XIVb taken therein;
FIGS. 16A and 16B are cross-sectional views of the lower panel of FIG. 15 as respectively seen along the lines of the sections XVIa-XVIa and XVIb-XVIb taken therein; and,
FIGS. 17A - 17D are cross-sectional views illustrating sequential steps of an exemplary embodiment of a method for manufacturing a upper panel of a flexible display device in accordance with the present invention.

### DETAILED DESCRIPTION OF THE EMBODIMENTS

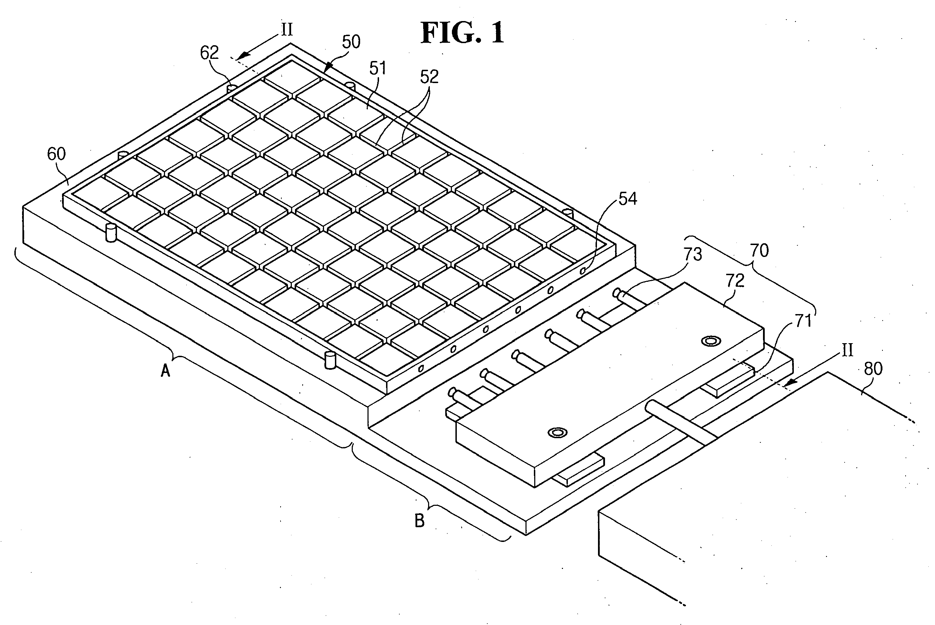

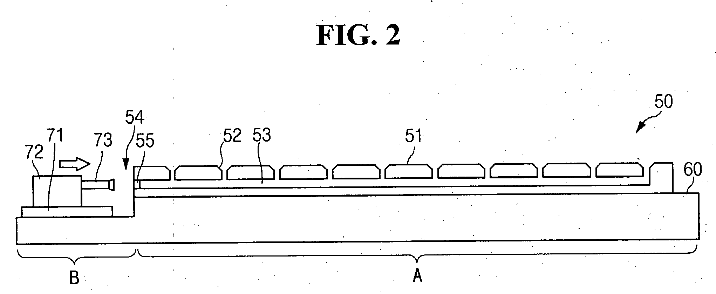

FIG. 1 is a partial perspective view of an exemplary embodiment of an apparatus for manufacturing flexible display devices in accordance with the present invention, and FIG. 2 is a cross-sectional view of the exemplary apparatus of FIG. 1, as seen along the lines of the section II-II taken therein.

Referring to FIG. 1, the exemplary apparatus includes a supporting member main body 50, a guide 60 for holding the supporting member main body 50, and a connector 70 for connecting the supporting member main body 50 to an external vacuum source 80.

The supporting member main body 50 serves to prevent a flexible mother substrate 10 (not illustrated in FIGS. 1 and 2) from being bent during processing of a display device by holding the flexible mother substrate 10 in a substantially planar condition during the processing. Accordingly, the supporting member main body 50 has a size that is larger than the flexible mother substrate 10 and sufficiently large as to enable it to hold the flexible mother substrate 10 adequately. In one advantageous exemplary embodiment, the main body 50 is formed of aluminum.

As illustrated in FIGS. 1 and 2, a mount 51 is disposed on an upper surface of the supporting member main body 50. The flexible mother substrate 10 (not illustrated in FIGS. 1 and 2) mounts directly on the upper surface of the mount 51, and accordingly, the mount 51 has a length and width that correspond to those of the flexible mother substrate 10.

A plurality of grooves 52 are formed in the mount 51. The grooves 52 are disposed in a lattice shape, and the cross-section of each groove 52 is V-shaped.

As described in more detail below, the flexible mother substrate 10 includes an organic layer formed of at least one material selected from the group consisting of polyethylene ether phthalate, polyethylene naphthalate, polycarbonate, polyarylate, polyether imide, polyether sulfonate, polyimide, or polyacrylate. The flexible mother substrate 10 may further include an under-coating of an acryl-based resin sequentially formed on both sides of the organic layer, a barrier of SiO₂ or Al₂O₃, and a hard-coating made of an acryl-based resin. These layers prevent the flexible mother substrate 10 from being damaged physically and chemically during the manufacture of a display.

As illustrated in FIG. 2, vacuum paths 53 are formed inside the supporting member main body 50 so as to penetrate completely through the main body 50. The vacuum paths 53 physically communicate with the grooves 52. As illustrated in FIGS. 1 and 2, one end of each of the vacuum paths 53 forms a nipple 54 that communicates exteriorly of the main body 50. Each nipple 54 includes a stopper 55 that is rotatably disposed in the nipple to selectively shut off the vacuum path 53 associated therewith with rotation thereof.

The guide 60 serves to fix the relative vertical positions of the supporting member main body 50 and the connector 70. Specifically, the guide 60 includes a first planar region (A) and a second planar region (B) disposed lower than the first region (A). The supporting main body 50 is disposed on the first region (A) of the main body, and the connector 70 is disposed on the second region (B) thereof.

A plurality of fixing pins 62 is disposed on the first region (A) of the guide 60 to prevent movement of the supporting member main body 50 thereon.

The connector 70 includes a plurality of legs 71 fixed on the second region (B) of the guide 60, a body 72 disposed on the legs 71, and a plurality of connecting pipes 73 extending from the body 72 to the supporting member main body 50.

The body 72 is slidably attached on the legs 71. The number of connecting pipes 73 is identical to the number of nipples 54, and each of the connecting pipes 73 has a shape that corresponds to the shape of the nipples 54 of the supporting member main body 50. The connecting pipes 73 can be attached to and detached from the nipples 54 by sliding the body 72 toward and away from them on the legs 71, respectively.

As described above, since the guide 60 includes the first and second regions A and B respectively disposed at different heights, the respective location of each of the nipples 54 of the supporting member main body 50 can be matched to that of the corresponding connecting pipe 73 located on one end of the connector 70. The vacuum source 80, such as a compressor, is connected to the other end of the connector 70.

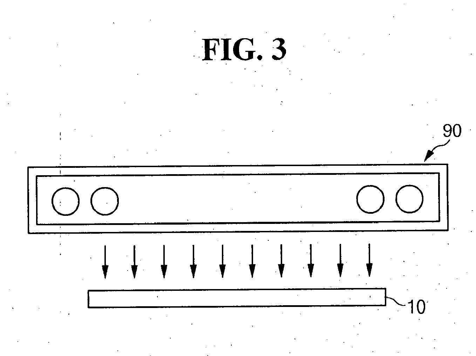

The operation of the exemplary apparatus is described in detail below with reference to FIG. 3 to FIG. 6, wherein FIGS. 3 to 6 are cross-sectional views illustrating sequential processes involved in the manufacture of a flexible display device in accordance with the present invention.

Referring to FIG. 3, an electrostatic force is applied to one side of a flexible mother substrate 10, such as a plastic mother substrate, using an electrostatic generator 90. The electrostatically charged flexible mother substrate 10 is then placed on the mount 51 of the supporting member main body 50, which in turn is disposed on the guide 60 of the apparatus. When the flexible mother substrate 10 is disposed in place, the side that received the electrostatic force is disposed in contact with the mount 51 of the supporting member mount 50.

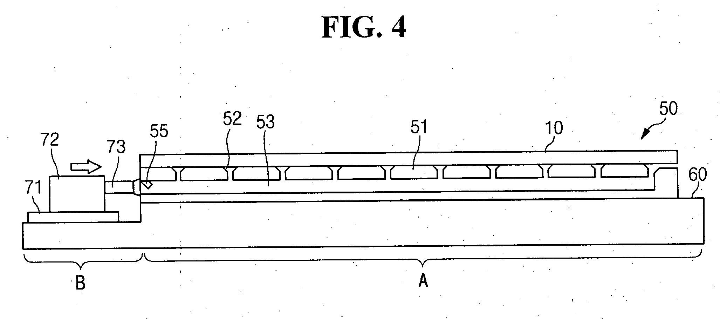

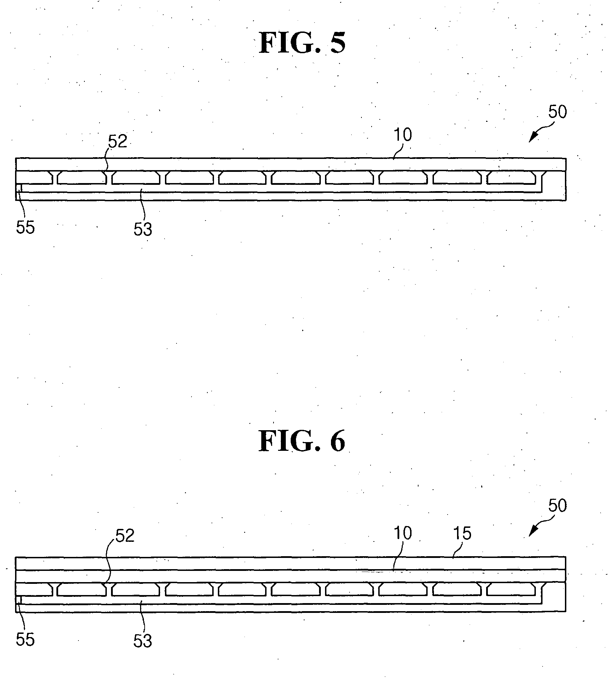

As illustrated in FIG. 5, the body of the connector 70 coupled to the vacuum source 80 is then slid toward the supporting member main body 50 in the direction of the arrow of FIG. 4 such that the respective connector pipes 73 and the nipples 54 engage and connect to each other, and the stoppers 55 of the inlets of the nipples 54 are rotated upwardly and thereby opened. As a result, the vacuum paths 53 of the supporting member main body 50 are placed in fluid communication with the vacuum source 80 through the connector 70.

The vacuum source 80 is then actuated so as to produce a vacuum in the vacuum paths 53 and the grooves 52 connected to the vacuum paths 53, thereby drawing the flexible mother substrate 10 firmly down onto the mount 51 of the supporting member main body 50.

Then, as illustrated-in FIG. 5, the body 72 of the connector 70 is pulled away from the supporting member main body 50 such that the respective connector pipes 73 and the nipples 54 disengage from each other, and the stoppers 55 at the inlets of the nipples 54 are rotated downwardly and thereby closed. Thereafter, the vacuum remaining in the vacuum paths 53 and the grooves 52 is sufficient to sustain the hold of the main body 50 on the flexible mother substrate 10.

Finally, as illustrated in FIG. 6, the supporting member main body 50 is separated from the guide 60, and a thin film pattern 15 is formed on the flexible mother substrate 10. During this process, the flexible mother substrate 10 cannot be bent or stretched because the flexible mother substrate 10 is fixed firmly to the supporting member main body 50 by the residual vacuum therein. Further, since an adhesive is not used between the supporting member 50 and the flexible mother substrate 10, no deterioration of the substrate 10 from use of an adhesive can occur.

It should be noted that it is not necessary for the vacuum source 80 to be connected to the supporting member 50 after the vacuum has been created inside the vacuum paths 53 and the grooves 52 thereof, and accordingly, subsequent processes, such as the forming of the thin film pattern 15 on the flexible mother substrate 10 above, can be performed on the flexible display device independently of the vacuum source 80. Also, the adhesive force between the flexible mother substrate 10 and the supporting member 50 is further improved because, as discussed above, the flexible mother substrate 10 is vacuum attached to the supporting member main body 50 after the electrostatic force has been applied to the flexible mother substrate 10.

After the thin film pattern 15 has been formed, the flexible mother substrate 10 is separated from the supporting member main body 50, and a flexible display device is manufactured by assembling the separated flexible mother substrate 10 with another flexible substrate (not illustrated) having a thin film pattern formed thereon.

In the descriptions that follow, an LCD display using a flexible mother substrate is described by way of example. However, it should be understood that the flexible mother substrates 10 described herein can also be used as substrates in LEDs, OLEDs, or other types of displays.

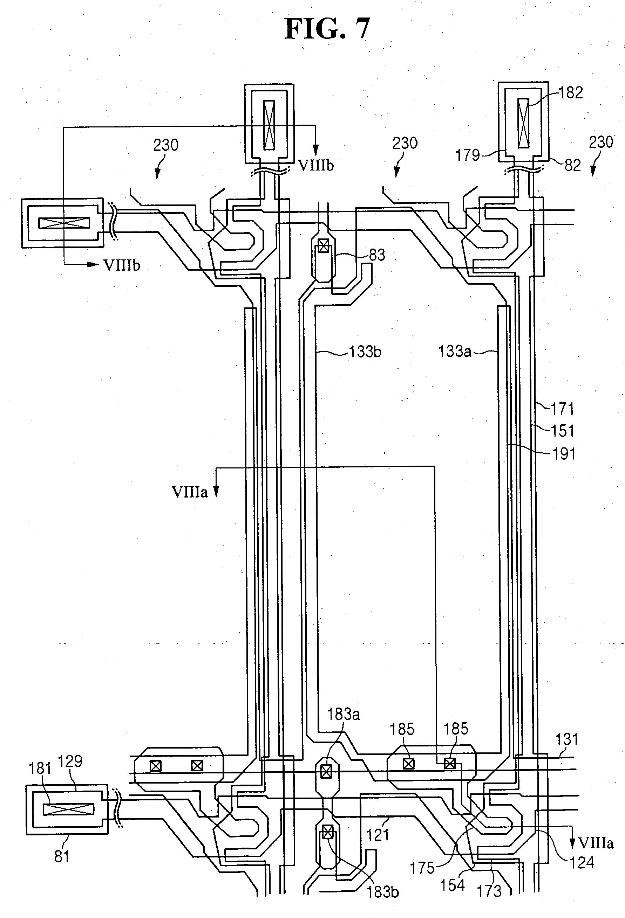

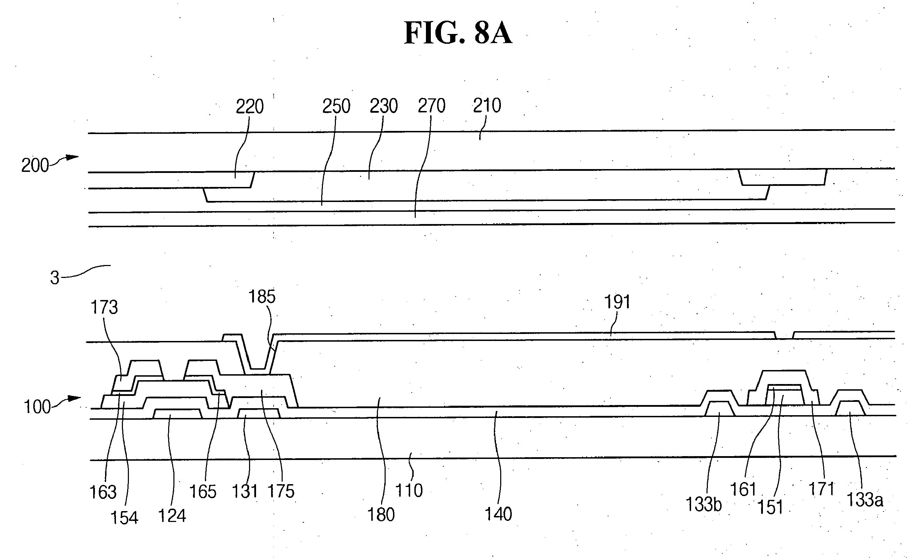

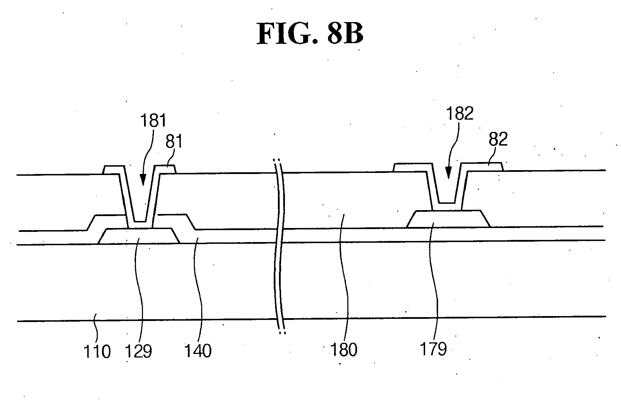

FIG. 7 is a partial top plan view of an exemplary embodiment of an LCD in accordance with the present invention, showing a single pixel area thereof, and FIGS. 8A and 8B are cross-sectional views of the exemplary LCD of FIG. 7, as respectively seen along the lines of the sections VIIIa-VIIIa and VIIIb-VIIIb taken therein.

Referring to FIGS. 7 to 8B, the exemplary LCD includes a lower panel 100, an upper panel 200 facing the lower panel 100; and a liquid crystal layer 3 interposed therebetween.

The lower panel 100 includes a plurality of gate lines 121 and a plurality of storage electrode lines 131 that are formed on a flexible substrate 110.

The gate lines 121 transfer gate signals, and in FIG. 7, extend in a generally horizontal direction. Each of the gate lines 121 includes a plurality of gate electrodes 124 that protrude downwardly and a wide end 129 for connecting to other layers or to an external driving circuit. A gate driving circuit (not illustrated) for generating the gate signal may be mounted on a flexible printed circuit film (not illustrated) that attaches to the substrate 110, may be directly mounted on the substrate 110, or may otherwise be integrated with the substrate 110. In the case of a gate driving circuit that is integrated with the substrate 110, the gate lines 121 can extend so as to connect directly with the gate driving circuit.

The storage electrode lines 131 receive a selected voltage. Each of the storage electrode lines 131 includes a branch line that extends generally parallel to the gate lines 121, and a plurality of pairs of storage electrodes 133a and 133b that branch out therefrom. Each of the storage electrode lines 131 is disposed between two adjacent gate lines 121, and the branch line is disposed closer to the lower of the two gate lines 121. Each of the storage electrodes 133a and 133b includes a fixed end connected to the branch line, and a free end. The fixed end of the storage electrode 133b is wider than the intermediate portion thereof, and the free end is divided into a straight part and a bent part. The storage electrode line 131 can have various other shapes and arrangements than those of the exemplary embodiment described and illustrated.

The gate lines 121 and the storage electrode lines 131 can be made of an aluminum group metal, such as aluminum (Al) or an aluminum alloy, a silver group metal, such as silver (Ag) or a silver alloy, a copper group metal, such as copper (Cu) or a copper alloy, a molybdenum group metal, such as molybdenum (Mo) or a molybdenum alloy, chromium (Cr), tantalum (Ta), and titanium (Ti). They can also have a multi-layer structure that includes two conductive layers (not illustrated), each of which has different physical properties than the other. For example, one of the conductive layers may comprise a metal having low resistivity, such as an aluminum group metal, a silver group metal, or a copper group metal, in order to reduce signal delay or voltage drop. The other conductive layer may be made of a different material, and in particular, a material having excellent physical, chemical, and electrical contact characteristics in conjunction with indium tin oxide (ITO) and indium zinc oxide (IZO). For example, the other conductive layer may be made of a molybdenum group metal, chromium, titanium, or tantalum. Good examples of such multi-layer structures include a chromium lower layer and an aluminum (alloy) upper layer, and an aluminum (alloy) lower layer and a molybdenum (alloy) upper layer. However, the gate lines 121 and storage electrode lines 131 can also be made of various other metals and conductive materials than those described above.

The side surfaces of the gate lines 121 and storage electrode lines 131 are inclined relative to the surface of the substrate 110, and desirably, are inclined at an angle of from about 30°to about 80°.

A gate insulating layer 140 made of silicon nitride SiNx or silicon oxide SiOx is formed on the gate lines 121 and the storage electrode lines 131.

A plurality of semiconductor stripes 151 made of a hydrogenated amorphous silicon a-Si, polysilicon, or an organic semiconductor is formed on the gate insulating layer 140. The semiconductor stripes 151 extend in a generally vertical direction in FIG. 7, and each of the semiconductor strips 151 includes a plurality of projections 154 that project toward the gate electrodes 124. The respective widths of the semiconductor stripes 151 are widened around the gate lines 121 and storage electrode lines 131 so as to cover them extensively.

A plurality of ohmic contact stripes and islands (ohmic contacts) 161 and 165 are formed on the semiconductor stripes 151. The ohmic contacts 161 and 165 can be made of such materials as n+ hydrogenated amorphous silicon with an n-type impurity, phosphor doped at high concentration, and silicide. The ohmic contact stripes 161 include a plurality of projections 163. Each of the projections 163, formed in an associated pair with an ohmic contact island 165, is disposed at the projections 154 of an associated one of the semiconductor stripes 151.

As illustrated in FIG. 8A, the side surfaces of the semiconductors 151 and 154 and the ohmic contacts 161, 163, and 165 are also inclined relative to the substrate 110 at an angle of from about 30°to about 80°.

A plurality of data lines 171 and a plurality of drain electrodes 175 are formed on the ohmic contacts 161, 163, and 165 and the gate insulation layer 140.

The data lines 171 transfer data signals and extend in a generally vertical direction in FIG. 7, thereby crossing the gate lines 121 generally orthogonally. Each data line 171 crosses the storage electrode lines 131 and runs between adjacent sets of storage electrodes 133a and 133b. Each data line 171 includes a plurality of source electrodes 173 that extend toward the gate electrodes 124, and an widened end 179 for connection to another layer or an external driving circuit. A data driving circuit (not illustrated) for generating a data signal can be mounted on a flexible printed circuit film (not illustrated) and attached to the substrate 110, can mount directly on the substrate 110, or may otherwise be integrated with the substrate 110. Where the data driving circuit is integrated with the substrate I10, the data lines 171 can extend so as to connect directly thereto.

The drain electrodes 175 are separated from the data lines 171, face toward the source electrodes 173, and are centered on the gate electrodes 124. Each drain electrode 175 includes a wide end and an opposite, rod-shaped end. The wide end overlaps the branch lines of the storage electrode lines 131, and the rod-shaped end has a portion that is surrounded on three sides by the adjacent source electrode 173, which is bent in a J shape.

One gate electrode 124, one source electrode 173, and one drain electrode 175, together with one projection 154 of the semiconductor stripe 151, form a thin film transistor (TFT), and the channel of the thin film transistor is formed at the projection 154 between the source electrode 173 and the drain electrode 175. If the semiconductor stripe 151 is an organic semiconductor, the thin film transistor is referred to as an organic thin film transistor.

It is desirable that the data lines 171 and the drain electrodes 175 be made of a refractory metal, such as molybdenum, chromium, tantalum, and titanium, or respective alloys thereof, or that they have a multi-layer structure (not illustrated) that includes a refractory metal layer and a low resistivity conductive layer, as described above. Examples of such multi-layer structures include double layers comprising a chromium or molybdenum (or alloy) lower layer and an aluminum (or alloy) upper layer, and a triple layer comprising a molybdenum (or alloy) lower layer, an aluminum (or alloy) middle layer, and a molybdenum (or alloy) upper layer. However, the data lines 171 and the drain electrodes 175 can be made of various other metals or conductors than those described above.

The sides of the data lines 171 and the drain electrodes 175 are also inclined relative to the upper surface of the substrate 110, and preferably, at an angle of from about 30° to about 80°.

The ohmic contacts 161, 163, and 165 are disposed only on the semiconductors 151 and 154, and under the data lines 171 and the drain electrodes 175, and serve to reduce the respective contact resistances therebetween. The width of the semiconductor stripes 151 is generally less than the width of the data lines 171. As described above, the width of the semiconductor stripes 151 increases around the gate lines 121, thereby smoothing the profile of the surface and preventing the data lines 171 from being shorted. The semiconductors 151 and 154 include parts that are exposed by reason of not being covered by the data lines 171 and the drain electrodes 175, such as a part disposed between the source electrodes 173 and the drain electrodes 175.

As illustrated in FIG. 8A, a passivation layer 180 is formed on the data lines 171, the drain electrodes 175, and the exposed parts of the semiconductors 151 and 154. The passivation layer 180 may be made of either an inorganic insulator or an organic insulator, and can have a flat upper surface. The inorganic insulators may include, for example, silicon nitride or silicon oxide. The organic insulator can have photosensitivity, and it is desirable that its dielectric constant be about 4.0. In an alternative embodiment, however, the passivation layer 180 may have a double layer structure formed of a lower, inorganic layer and an upper, organic layer, so that the passivation layer does not adversely influence the exposed parts of the semiconductors 151 and 154 and yet still exhibits excellent insulating characteristics.

As illustrated in FIGS. 7 and 8A, a plurality of contact holes 182 and 185 are formed in the passivation layer 180 to expose the ends 179 of the data lines 171 and the drain electrodes 175. A plurality of contact holes are formed in the passivation layer 180 and the gate insulation layer 140: A plurality of contact holes 181 are formed to expose the ends 129 of the gate lines121; a plurality of contact holes 183a are formed to expose selected parts of the fixed ends of the storage electrodes 133b; and, a plurality of contact holes 183b are formed to expose straight portions of the free ends of the storage electrodes 133a.

As illustrated in FIG. 7, a plurality of pixel electrodes 191, a plurality of overpasses 83, and a plurality of contact assistants 81 and 82 are formed on the passivation layer 180. The pixel electrodes 191 are physically and electrically connected to associated ones of the drain electrodes 175 through respective ones of the contact holes 185, and each receives a respective data voltage from the associated drain electrode 175. After the pixel electrodes 191 receive the data voltages, they induce an electric field in cooperation with the common electrode of the upper panel 200, which receives a common voltage, so as to control the direction of the molecules of the liquid crystal layer (not illustrated) disposed between the two electrodes. The polarization of light passing through the liquid crystal layer varies in accordance with the direction of the liquid crystal molecules. Additionally, the overlapping pixel electrode 191 and the common electrode form a capacitor, i.e., a liquid crystal capacitor, which is operative to sustain the voltage applied to the pixel electrode after the thin film transistor is turned off.

As illustrated in FIG 7, the pixel electrodes 191 overlap the storage electrodes 133a and 133b and the storage electrode lines 131. The pixel electrodes 191 and the drain electrodes 175 electrically connected thereto overlap the storage electrode lines 131 to form another capacitor, called a storage capacitor. The storage capacitor enhances the ability of the liquid crystal capacitor to sustain the pixel electrode voltage.

The contact assistants 81 and 82 are connected to the ends 129 of the gate lines 121 and the ends 179 of the data lines 171 through the contact holes 181 and 182. The contact assistants 81 and 82 enhance adhesion between the ends 129 and 179 of the gate lines 121 and data lines 171 and an external device, and also serve to protect them.

The overpasses 83 cross the gate lines 121, and are connected to the exposed parts of the storage electrode lines 131 and the exposed ends of the free ends of the storage electrodes 133b through the contact holes 183a and 183b located at opposite sides thereof, with the gate lines 121 interposed therebetween. The storage electrode lines 131, including the storage electrodes 133a and 133b, can be used to repair defects of the gate lines 121, the data lines 171, or the thin film transistors with the overpasses 83.

As illustrated in FIG. 8A, the upper panel 200 of the exemplary display includes a light blocking member 220 formed on a flexible substrate 210. The light blocking member 220 is sometimes referred to as a black matrix and defines a plurality of openings facing the pixel electrodes 191. The light blocking member 220 blocks light leakage between adjacent pixel electrodes 191.

A plurality of color filters 230 is disposed on the substrate 210, each disposed in a respective one of the openings of the light blocking member 220. The color filters 230 extend in a vertical direction along the pixel electrodes 190, thereby forming stripes. Each color filter 230 can express one primary color, such as red, green, or blue.

An overcoat 250 is formed on the color filters 230 and the light blocking member 220. The overcoat 250 can be made of an insulation material and serves to protect the color filters 230, prevents them from being exposed, and provides a flat surface on the substrate.

A common electrode 270 is formed on the overcoat 250. The common electrode 270 is preferably made of a transparent conductor, such as ITO or IZO.

An alignment layer (not illustrated) is formed on the inner sides of the display panels 100 and 200 to align the molecules of the liquid crystal layer 3, and at least one polarizer (not illustrated) is formed at the outer sides of the display panels 100 and 200.

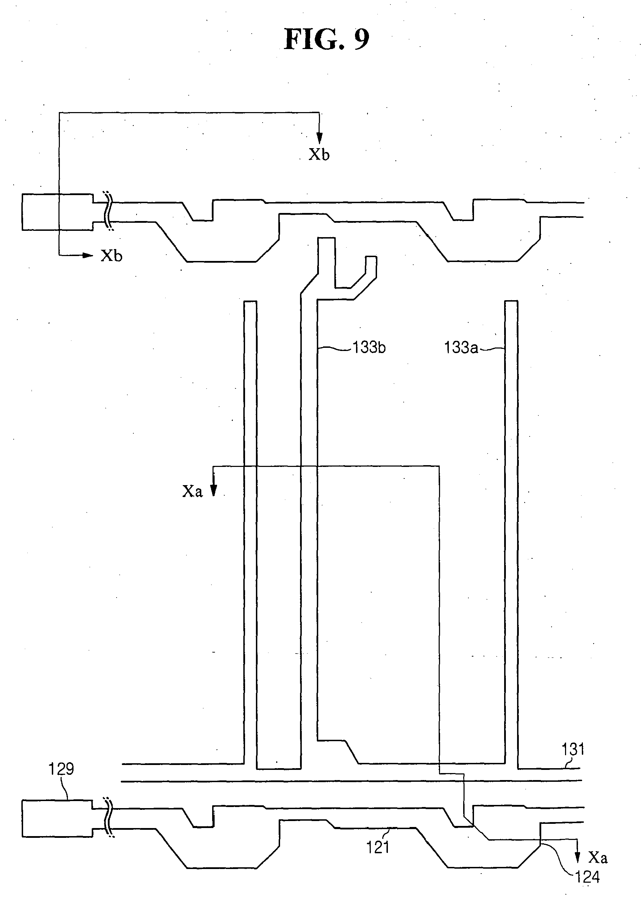

Following is a description, made with reference to FIGS. 9 to 16B and FIGS. 7 to 8B, of an exemplary embodiment of a method for manufacturing the lower panel 100 of FIGS. 7 to 8B in accordance with the present invention.

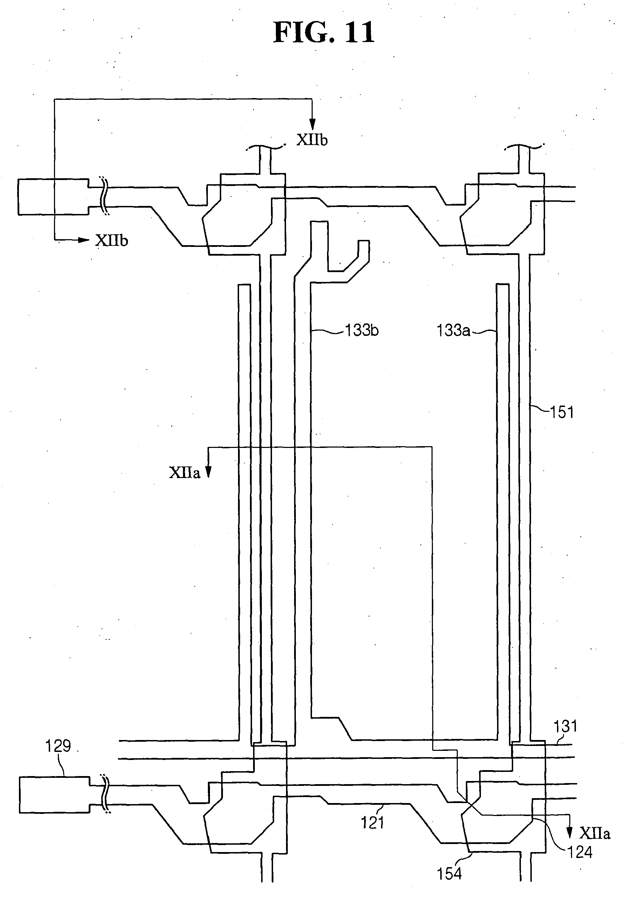

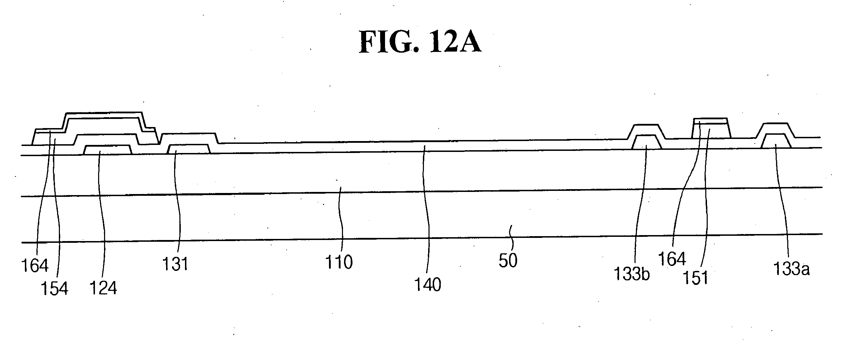

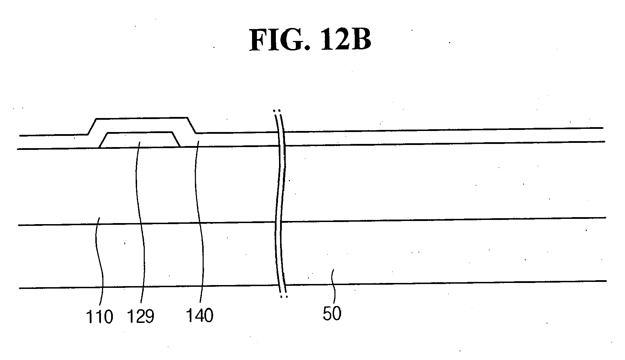

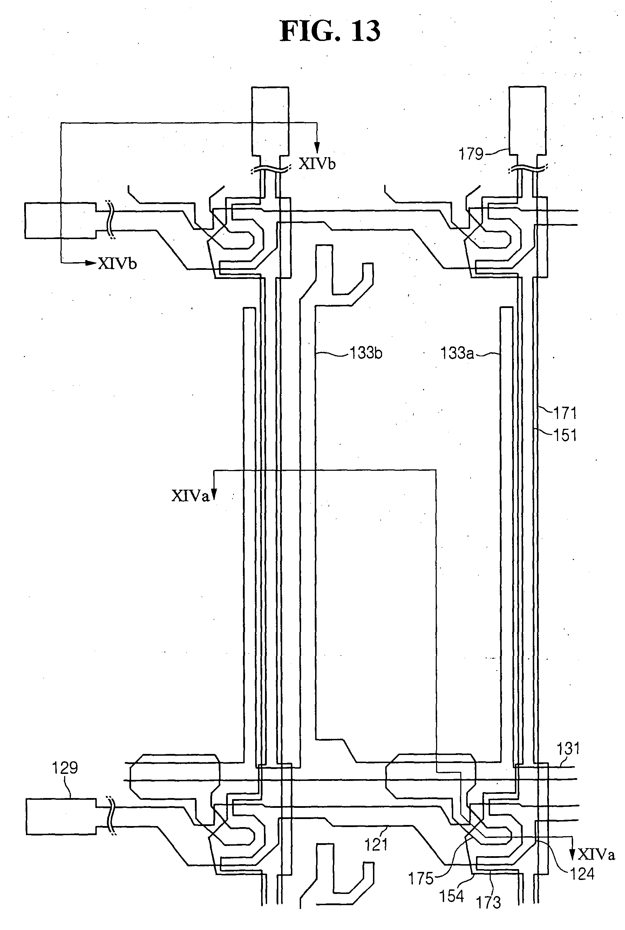

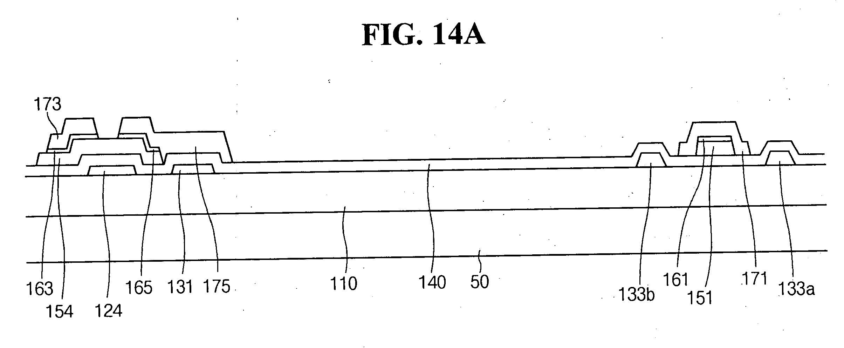

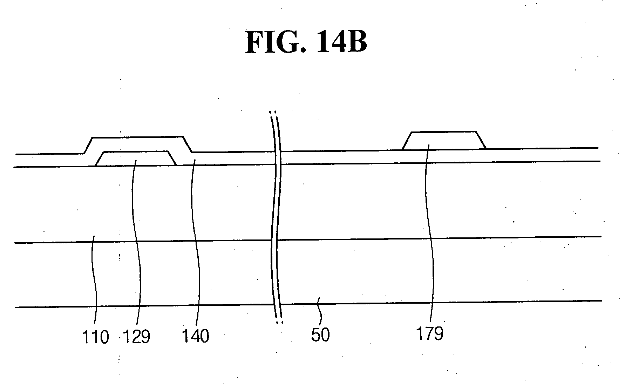

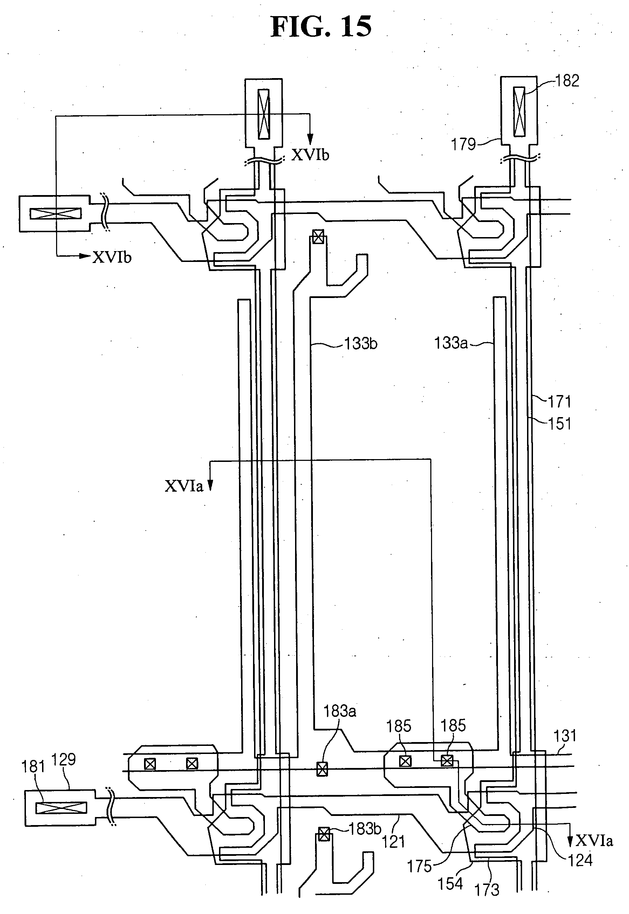

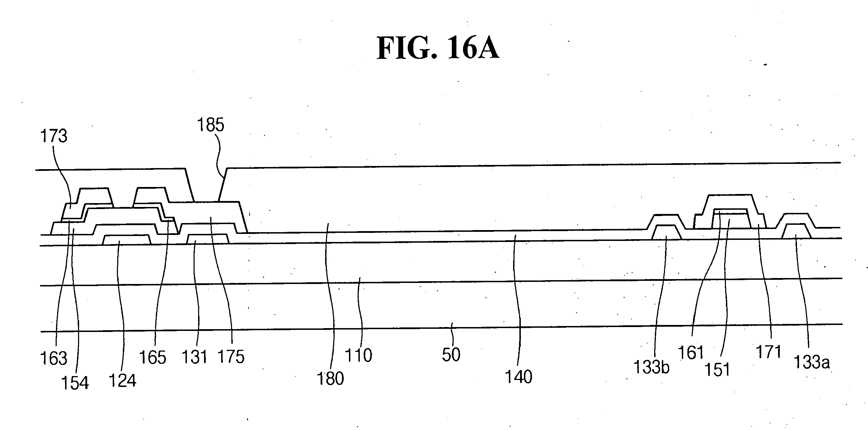

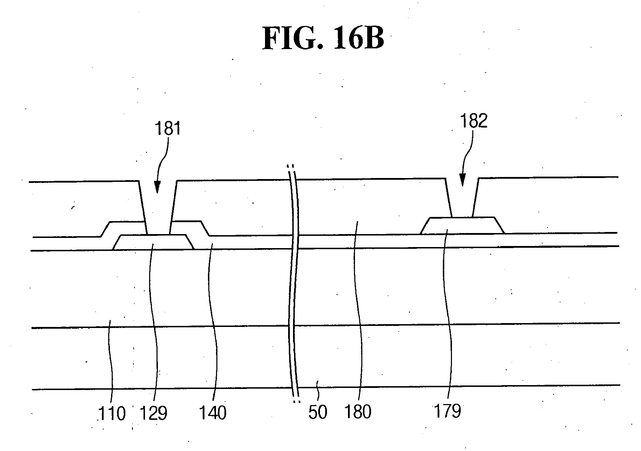

FIGS. 9, 11 and 15 are partial top plan views illustrating sequential stages of the exemplary method for manufacturing the lower LCD panel of FIGS. 7 to 8B; FIGS. 10A and 10B are cross-sectional views of the panel as respectively seen along the lines of the sections Xa-Xa and Xb-Xb taken in FIG. 9; FIGS. 12A and 12B are cross-sectional views of the panel as respectively seen along the lines of the sections XIIa-XIIa and XIIb-XIIb taken in FIG. 11; FIGS. 14A and 14B are cross-sectional views of the panel as respectively seen along the lines of the sections XIVa-XIVa and XIVb-XIVb taken in FIG. 13; and, FIGS. 16A and 16B are cross-sectional views of the panel as respectively seen along the lines of the sections XVIa-XVIa and XVIb-XVIb taken in FIG. 15.

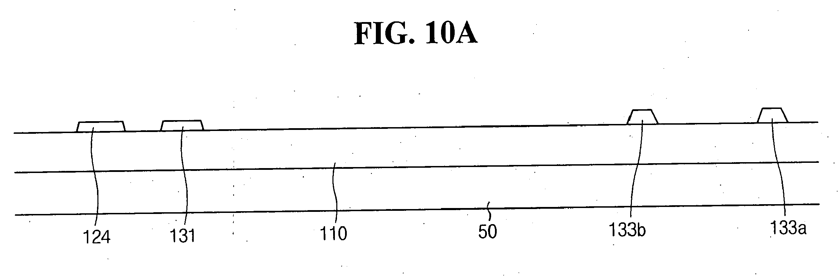

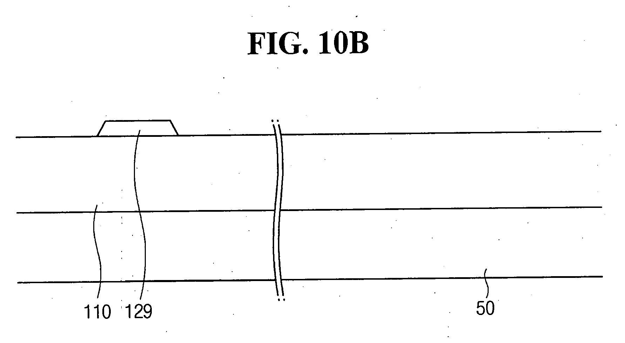

Referring to FIGS. 9 to 10B, a flexible substrate 110 is attached on a supporting member main body 50. Metal layers are then sequentially stacked on the substrate 110 through sputtering, and photolithography is then performed, to form a plurality of gate lines 121 having gate electrodes 124 and ends 129, and a plurality of storage electrode lines 131 having storage electrodes 133a and 133b.

Referring to FIGS. 11 to 12B, a gate insulating layer 140, an intrinsic amorphous silicon layer, and an extrinsic amorphous silicon layer are sequentially stacked on the substrate. A plurality of linear impurity semiconductors 164, and a plurality of linear intrinsic semiconductors 151 having projections 154 thereon are then formed on the substrate by patterning the two upper layers.

Referring to FIGS. 13 to 14B, a metal layer is stacked through sputtering, and a plurality of data lines 171 having source electrodes 173 and ends 179 and a plurality of drain electrodes 175 are formed through photolithography.

A plurality of ohmic contact stripes 161 and a plurality of ohmic contact islands 165 having projections 163 thereon are then completely formed by removing the exposed portions of the impurity semiconductors 164 not covered by the data lines 171 and the drain electrodes 175, and simultaneously, the projections 154 of the intrinsic semiconductors 151 are exposed. During this process, it is desirable to continuously perform an oxygen plasma treatment in order to stabilize the surface of the exposed parts of the intrinsic semiconductors 151.

Referring to FIGS. 15 to 16B, an inorganic insulator is stacked on the substrate through chemical vapor deposition, or alternatively, a photosensitive organic insulator is coated thereon, thereby forming a passivation layer 180. The passivation layer 180 and the gate insulating layer 140 are then selectively etched, thereby forming contact holes 181, 182, 183a, 183b, and 185.

Finally, and referring to FIGS. 7 to 8B, an ITO layer or an IZO layer is stacked on the substrate through sputtering, and photolithography is performed, thereby forming a plurality of pixel electrodes 191 and a plurality of contact assistants 81 and 82. Additionally, an alignment layer (not illustrated) can also be formed thereon.

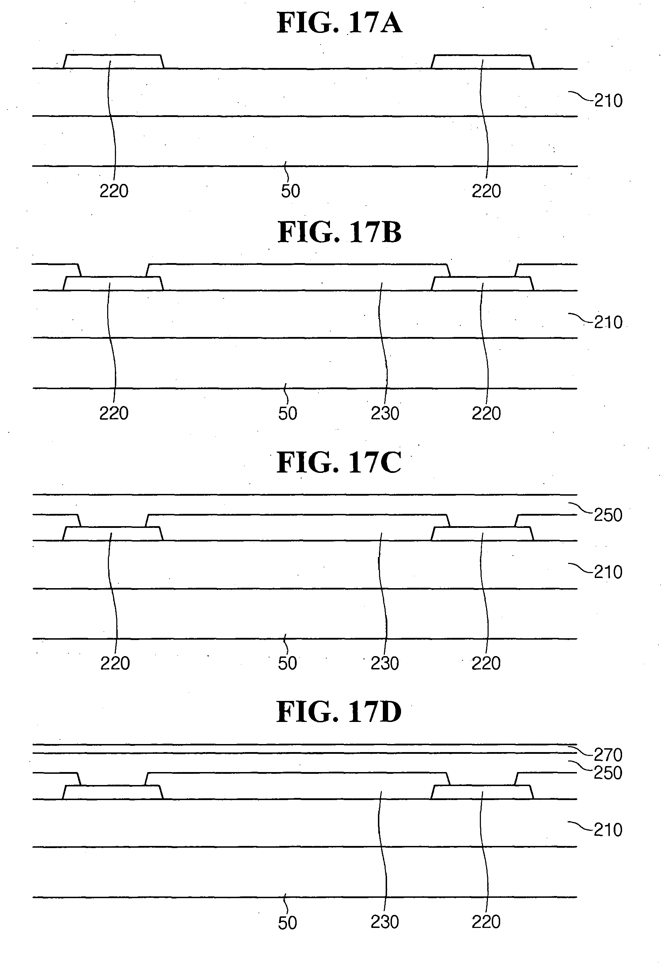

Following is a description, made with reference to FIGS. 17A to 17D, of an exemplary embodiment of a method for manufacturing the upper panel 200 of the LCD of FIGS. 7 to 8B in accordance with the present invention.

Referring to FIG. 17A, a flexible substrate 210 is attached on a supporting member main body 50 by means of a vacuum, in the manner described above. A material having excellent light blocking characteristics is then stacked on the flexible substrate 210, and a photolithography process is performed with a mask to pattern the stacked material, thereby forming a light blocking member 220.

As illustrated in FIG. 17B, a photosensitive composition is coated on the flexible substrate 210, thereby forming a plurality of color filters 230 displaying three colors:

An overcoat 250 is then formed on the color filters, as illustrated in FIG. 17C, and a common electrode 270 is stacked on the overcoat 250, as illustrated in FIG. 17D.

After the formation of the common electrode 270, the lower panel 100 is assembled to the upper panel 200. A liquid crystal material is then injected between the lower panel 100 and the upper panel 200. Alternatively, the liquid crystal can be injected before assembly of the lower panel 100 and the upper panel 200.

Finally, the lower panel 100 and the upper panel 200 are removed from the supporting member main body 50. The lower panel 100 assembled with the upper panel 200 is then cut and separated according to the size of the display devices to be manufactured therefrom.

In the exemplary method of FIGS. 3 to 6, the thin film pattern 15 can include an organic thin film transistor that includes an organic semiconductor. The exemplary method can be used not only to make LCDs, but also, OLEDs.

In accordance with the exemplary methods and apparatus disclosed herein, a flexible substrate is attached to a supporting member in a single vacuum attachment process, and thereafter, the flexible substrate is prevented from being bent throughout the process of manufacturing a flexible display device therefrom independently of the vacuum source used to produce the initial vacuum attachment.

As those of skill in this art will by now appreciate, many modifications, substitutions and variations can be made in and to the methods and apparatus of the present invention without departing from its spirit and scope. In light of this, the scope of the present invention should not be limited to that of the particular embodiments illustrated and described herein, as they are only by way of examples thereof, but instead, should be fully commensurate with that of the claims appended hereafter and their functional equivalents.

## Claims

1. An apparatus for manufacturing a flexible display device, the apparatus comprising:
a supporting member main body;
a mount disposed on a surface of the supporting member main body, the mount including a plurality of grooves and mounting a flexible mother substrate;
vacuum paths formed in the supporting member main body and in fluid communication with the grooves, each vacuum path having an end communicating exteriorly of the main body; and,
a nipple disposed in the exteriorly communicating end of each vacuum path.

2. The apparatus of claim 1, further comprising stoppers, each rotatably disposed in an inlet of a respective one of the nipples and operative to selectively open and close the nipple in response to a rotation thereof.

3. The apparatus of claim 1, further comprising a guide for holding the supporting member main body.

4. The apparatus of claim 3, further comprising a connector connected to an external vacuum source and selectively attachable to and detachable from the nipples.

5. The apparatus of claim 4, wherein the connector is slidably disposed on the guide for sliding attachment to and detachment from the nipples.

6. The apparatus of claim 3, further comprising a plurality of fixing pins for fixing the supporting member main body against movement on the guide.

7. The apparatus of claim 1, wherein each groove has a V-shaped cross-section.

8. The apparatus of claim 1, wherein the grooves are disposed in a lattice shape.

9. The manufacturing apparatus of claim 1, wherein the supporting member main body comprises aluminum.

10. A method for manufacturing a flexible display device, the method comprising:
applying an electrostatic force to one side of a flexible mother substrate;
mounting the flexible mother substrate on a supporting member;
attaching the flexible mother substrate to the supporting member by means of a vacuum; and,
forming a thin film pattern on the flexible mother substrate.

11. The method of claim 10, wherein the attaching of the flexible mother substrate includes:
connecting vacuum paths penetrating the supporting member to an external vacuum source;
creating a vacuum in the vacuum paths using the vacuum source; and,
separating the vacuum source from the supporting member.

12. The method of claim 10, wherein the flexible mother substrate comprises plastic.

13. The method of claim 10, wherein the flexible mother substrate comprises:
an organic layer;
an under-coating formed on both sides of the organic layer;
a barrier formed on the under-coating; and,
a hard-coating formed on the barrier.

14. The method of claim 13, wherein the organic layer comprises at least one selected from the group consisting of polyethylene ether phthalate, polyethylene naphthalate, polycarbonate, polyarylate, polyether imide, polyether sulfonate, polyimide, or polyacrylate.

15. The method of claim 14, wherein the under-coating and the hard-coating comprise acryl resin.

16. The method of claim 14, wherein the barrier comprises SiO₂ or Al₂O₃.

17. The method of claim 10, wherein the supporting member comprises aluminum.

18. The method of claim 10, wherein the thin film pattern comprises an amorphous silicon thin film transistor.

19. The method of claim 10, wherein the thin film pattern comprises an organic thin film transistor.
